(19) Europäisches Patentamt
European Patent Office
Office européen des brevets

(11) EP 1 298 454 B1

(12) EUROPÄISCHE PATENTSCHRIFT

(45) Veröffentlichungstag und Bekanntmachung des Hinweises auf die Patenterteilung:
**13.08.2008 Patentblatt 2008/33**

(51) Int Cl.:
*G01S 17/89* *(2006.01)*     *G01S 17/93* *(2006.01)*
*G01S 17/66* *(2006.01)*     *G06T 5/00* *(2006.01)*

(21) Anmeldenummer: **02021124.9**

(22) Anmeldetag: **23.09.2002**

(54) **Verfahren zur Erkennung und Verfolgung von Objekten**

Method for recognising and tracking objects

Procédé de reconnaissance et de suivi d'objets

(84) Benannte Vertragsstaaten:
**AT BE BG CH CY CZ DE DK EE ES FI FR GB GR IE IT LI LU MC NL PT SE SK TR**

(30) Priorität: **28.09.2001 DE 10148071**

(43) Veröffentlichungstag der Anmeldung:
**02.04.2003 Patentblatt 2003/14**

(73) Patentinhaber: **IBEO Automobile Sensor GmbH**
**22179 Hamburg (DE)**

(72) Erfinder:
• **Lages, Ulrich, Dr.**
**21031 Hamburg (DE)**
• **Dietmayer, Klaus**
**89075 Ulm (DE)**
• **Sparbert, Jan**
**71272 - Renningen Malmsheim (DE)**
• **Fürstenberg, Kay**
**89075 Ulm (DE)**
• **Streller, Daniel**
**89231 Neu-Ulm (DE)**

(74) Vertreter: **Manitz, Finsterwald & Partner GbR**
**Postfach 31 02 20**
**80102 München (DE)**

(56) Entgegenhaltungen:
**EP-A- 0 631 154          DE-A- 19 926 559**
**US-A- 6 125 191**

• **FUERSTENBERG K ET AL: "Object tracking and classification using laserscanners pedestrian recognition in urban environment" IEEE INTELLIGENT TRANSPORTATION SYSTEMS CONFERENCE PROCEEDINGS, 25. August 2001 (2001-08-25), Seiten 451-453, XP010555813**
• **DIETMAYER ET AL: 'Model based object classification and object tracking in traffic scenes from range images' PROCEEDINGS OF IV 2001, IEEE IVS Mai 2001, TOKIO, Seiten 25 - 30, XP009023302**
• **KIRCHNER ET AL: 'Der Laserscanner als intelligenter Kfz-Sensor' AUTOMATISIERUNGSTECHNISCHE PRAXIS - ATP Bd. 40, Nr. 8, 1998, OLDENBOURG INDUSTRIEVERLAG, MUNCHEN, DE, Seiten 26-32 - 34, XP001156940**
• **SPARBERT ET AL: 'Lane detection and street type classification using laser range images' IEEE CONF. ON INTELLIGENT TRANSPORTATION SYSTEMS 25 August 2001, PISCATAWAY, NJ, USA, Seiten 454 - 459, XP010555814**
• **LAGES ET AL: 'Nahfeldüberwachung rund um das Fahrzeug: Der Laserscanner und seine Möglichkeiten zur Entlastung des Fahrers' PROCEEDINGS OF VD+ CONGRESS Mai 2001, BERLIN, GERMANY, Seiten 1 - 11**

**Beschreibung**

Die vorliegende Erfindung betrifft ein Verfahren zur Erkennung und Verfolgung von Objekten auf der Basis von bevorzugt geschwindigkeits- oder tiefenaufgelösten Bildern von Gegenständen in einem Sichtbereich wenigstens eines, insbesondere an einem Fahrzeug angeordneten, Sensors, insbesondere eines Laserscanners, bei dem die Erkennung und Verfolgung unter Verwendung eines jeweils einem der Objekte zugeordneten Modells für die zeitliche Entwicklung von Zustandsparametern erfolgt, die wenigstens eine sensorspezifische Eigenschaft des Objekts beschreiben, wobei das Modell einen Modelltyp hat und durch wenigstens einen Modellparameter parametrisierbar ist.

Derartige Verfahren sind grundsätzlich bekannt. Sie finden besonderes Interesse im Hinblick auf Anwendungen im Fahrzeugbereich, bei denen mit geeigneten Sensoren, insbesondere Laserscannern, die an einem Fahrzeug beispielsweise im Frontbereich angebracht sind, der in Fahrtrichtung vor dem Fahrzeug liegende Bereich überwacht wird. Von dem Sensor erfaßten Gegenständen, insbesondere Fahrzeugen und/oder Personen, werden dann mittels eines solchen Verfahrens Objekte zugeordnet, deren Daten zur automatischen Überwachung des Bereichs vor dem Fahrzeug und/oder der Einleitung von Sicherheitsmaßnahmen und/oder sogar Eingriffen in die Steuerung des Kraftfahrzeugs verwendet werden können.

Eine solche Verwendung stellt jedoch hohe Anforderungen an die Geschwindigkeit und Genauigkeit der Bestimmung von Zustandsparametern der Objekte, die die Lage des jeweiligen Objekts beschreiben. Insbesondere in Fällen, in denen die Daten zur Vermeidung von Kollisionen verwendet werden sollen, ist es notwendig, diese schnell, insbesondere in Echtzeit, und gleichzeitig möglichst genau bereitzustellen.

Die Veröffentlichung von Klaus C.J. Dietmayer et al., "Model Based Classification and Object Tracking in Traffic Scenes from Range Images", Proceedings of IV 2001, IEEE Intelligent Vehicles Symposium, IV 2001 Tokyo, beschreibt ein eingangs genanntes Verfahren. Insbesondere wird in einem Ausblick darauf hingewiesen, dass in Zukunft eine Diversifikation von Modellen stattfinden sollte, um zwischen Fahrzeugen, die in ihrer Bewegungsfreiheit eingeschränkt sind, und Personen, die sich frei bewegen können, zu unterscheiden.

Die Veröffentlichung von K. Fuerstenberg et al., "Object Tracking and Classification using Laserscanners - Pedestrian Recognition in urban environment", 2001 IEEE Intelligent Transportation Systems Conference Proceedings, Oakland, CA, USA, August 25-29, 2001, beschreibt ein Verfahren zur Klassifizierung von Objekten mittels eines Laserscanners, bei dem die Richtigkeit der Zuordnung eines Objekts zu einer Objektklasse fortlaufend überprüft wird.

Es ist Aufgabe der vorliegenden Erfindung, ein gattungsgemäßes Verfahren zu schaffen, das eine schnelle Bereitstellung von genauen Zustandsparametern erlaubt.

Die Aufgabe wird gelöst durch ein gattungsgemäßes Verfahren mit den Merkmalen des kennzeichnenden Teils des Anspruchs 1.

Bei dem gattungsgemäßen Verfahren werden Bilder eines Sensors benutzt. Hierbei kann es sich um zweidimensionale Bilder eines Videosensors handeln.

Es werden jedoch bevorzugt geschwindigkeits- oder tiefenaufgelöste Bilder eines Sensors verwendet. Unter einem geschwindigkeits- bzw. tiefenaufgelösten Bild eines Sensors wird in dieser Anmeldung eine Menge von bei einer Abtastung des Sichtbereichs des Sensors erfaßten Bildpunkten verstanden, denen Punkte bzw. je nach Auflösung des Sensors auch Bereiche eines von dem Sensor erfaßten Gegenstands entsprechen, wobei den Bildpunkten der Geschwindigkeit bzw. der Lage der zugehörigen Gegenstandspunkte entsprechende Koordinaten in mindestens zwei Dimensionen zugeordnet sind, die nicht beide senkrecht zur Blickrichtung des Sensors stehen. Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren zur Erfassung solcher geschwindigkeits- oder tiefenaufgelöster Bilder sind grundsätzlich bekannt.

Hierbei kann es sich beispielsweise um Ultraschallsensoren handeln.

Vorzugsweise werden Sensoren für elektromagnetische Strahlung verwendet.

Hierbei kann es sich beispielsweise um Radarsensoren handeln. Vorzugsweise werden bei diesen Geschwindigkeiten der Gegenstandspunkte verfolgt.

Besonders bevorzugt kann es sich bei den Sensoren für elektromagnetische Strahlung um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfaßt. Die so erfaßten Rohdaten für einen Bildpunkt können dann als Koordinaten den Winkel, bei dem der Reflex erfaßt wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Bei der Erkennung und Verfolgung der Objekte werden bei einem gattungsgemäßen Verfahren den Objekten zugeordnete Modelle verwendet, die zumindest dazu dienen, zusammen mit den Daten der geschwindigkeits- oder tiefenaufgelösten Bilder die Bewegung von Objekten zu verfolgen. Bei den sensorspezifischen Zustandsparametern kann es sich insbesondere um solche handeln, die dem Typ der von dem Sensor erfaßten Messdaten entsprechen. Bei Sensoren, die geschwindigkeitsaufgelöste Bilder erfassen, können insbesondere entsprechende, die Geschwindigkeit eines Gegenstands bzw. des dieses darstellenden Objekts beschreibende Zustandsvariablen, bei tiefenaufgelösten Bildern die Position eines Gegenstands bzw. des dieses darstellenden Objekts verwendet werden. Im einfachsten Fall kann es sich bei den Zustandsparametern, mit denen wenigstens die Position eines Objekts beschreibbar ist, um Koordinaten eines Bezugspunktes des Objekts, beispielsweise des geometrischen Schwerpunkts des Objekts, handeln.

Die Modelle können in bestimmte Typen eingeteilt werden und sind durch Modellparameter parametrisierbar. Die Anzahl und Art der Modellparameter ist dabei für den Modelltyp spezifisch, die Parametrisierung erfolgt durch Wahl entsprechender Werte des oder der Modellparameter. Insbesondere können die Modelle dazu dienen, die Position eines Objekts vorherzusagen, in deren Nähe dann in einem folgenden tiefenaufgelösten Bild nach dem Objekt gesucht werden kann.

Um eine gute Beschreibung des Objektverhaltens durch die Modelle zu erreichen, ist ein gattungsgemäßes Verfahren gemäß der Erfindung dadurch gekennzeichnet, daß zur Klassifizierung von Objekten mehrere Objektklassen vorgesehen werden, die wenigstens eine Eigenschaft von Objekten betreffen, die aus wenigstens einem der tiefenaufgelösten Bilder bestimmbar ist, daß mindestens einem Objekt in Abhängigkeit von der Eigenschaft des Objekts genau eine der Objektklassen zugeordnet ist und daß dem Objekt in Abhängigkeit von der zugeordneten Objektklasse ein Modelltyp und ein Wert für den entsprechenden Modellparameter zugeordnet werden.

Eine Objektklasse zeichnet sich dabei dadurch aus, daß Objekte, denen die Klasse zugeordnet ist, Gegenstände mit wenigstens einer bestimmten, für die Objektklasse spezifischen Eigenschaft darstellen. Grundsätzlich genügt eine Eigenschaft zur Spezifikation der Objektklasse, es können aber auch Kombinationen von Eigenschaften verwendet werden, die eine eindeutige Zuordnung erlauben.

Die Eigenschaften sind dabei vorzugsweise so gewählt, daß sie für einen Gegenstand zumindest für den Beobachtungszeitraum konstant bleiben sollten. Im Rahmen dieser Anmeldung wird unter dem Begriff "konstante Eigenschaft" auch verstanden, daß Gegenstände der entsprechenden Objektklasse eine ganze Menge von Ausprägungen einer in einem durch die Gegenstände der Objektklasse vorgegebenen Rahmen veränderlichen Eigenschaft umfassen kann, wobei die Ausprägungen sich insbesondere in einem vorgegebenem Rahmen auseinander entwickeln können. Die Eigenschaft besteht dann also in der Menge der speziellen Ausprägungen der veränderlichen Eigenschaft, die ein Gegenstand der entsprechenden Objektklasse annehmen kann. Beispielsweise kann ein Sattelzug oder ein Gelenkbus in gestrecktem Zustand im wesentlichen die Form eines Rechtecks aufweisen, aus der sich bei Kurvenfahrt jedoch eine sich aus dem Rechteck ergebende abgewinkelte, immer noch objektklassenspezifische Form entwickeln kann. Unter der Form wird dann nicht nur die Form in gestrecktem Zustand, sondern die Menge der möglichen Formen verstanden.

In einem erfaßten Bild können einzelne aus dem Bild bestimmte Eigenschaften auch eines Objekts, das einen unveränderlichen Gegenstand darstellt, beispielsweise je nach Perspektive veränderlich sein.

Bei den Eigenschaften kann es sich um qualitative Eigenschaften, aber auch um durch wenigstens einen Parameter beschreibbare Eigenschaften des Objekts bzw. des durch das Objekt dargestellten Gegenstands handeln. Dabei kann die Eigenschaft insbesondere auch darin bestehen, daß die Werte des Parameters innerhalb eines vorgegebenen Intervalls liegen. Eine zur Zuordnung einer Objektklasse zu einem Objekt verwendete, im folgenden als definierend bezeichnete Eigenschaft zeichnet sich dadurch aus, daß sie aus wenigstens einem erfaßten tiefenaufgelösten Bild ermittelbar ist.

Vorzugsweise werden die Objektklassen, d. h. die sie definierende Eigenschaft bzw. die sie definierenden Eigenschaften so gewählt, daß die Gegenstände, die diese objektklassenspezifischen definierenden Eigenschaften aufweisen, auch in bezug auf die Objekterkennung und -verfolgung so ähnliche Eigenschaften aufweisen, daß sie mittels gleicher Modelltypen und gleicher Werte der Modellparameter beschreibbar sind.

Das bedeutet, daß eine Objektklasse durch wenigstens eine definierende Eigenschaft von Objekten, über die die Zuordnung eines Objekts erfolgen kann, sowie einen Modelltyp und wenigstens einen Wert eines entsprechenden Modellparameters für den Modelltyp gekennzeichnet ist.

Objekte werden bei gattungsgemäßen Verfahren je nach Inhalt der Bilder gegebenenfalls neu gebildet. Grundsätzlich genügt es, daß mindestens einem Objekt nach seiner Bildung eine der Objektklassen zugeordnet ist. Vorzugsweise sind mehreren oder allen vorkommenden Objekten entsprechende Objektklassen zugeordnet. Weiterhin kann die Zuordnung einer Objektklasse zu einem Objekt dabei vor bzw. bei der Bildung des Objekts oder nach der Bildung des Objekts erfolgen.

Durch die objektklassenabhängige Zuordnung eines Modelltyps und mindestens eines Werts für einen entsprechenden Modellparameter kann das bei dem erfindungsgemäßen Verfahren zur Erkennung und Verfolgung von Objekten verwendete Modell das Verhalten des Objekts und insbesondere dessen Bewegung besser beschreiben als dies bei konventionellen Verfahren der Fall ist, die strukturell gleiche Modelltypen und gleiche Werte für Modellparameter für alle bei dem Verfahren auftretenden Objekte verwenden.

Insbesondere bei Verfahren, bei denen eine Vorhersage der Objektposition anhand eines Modells eines gegebenen Typs mit gegebenen Modellparametern erfolgt, kann hierdurch eine wesentlich genauere Vorhersage erfolgen. Darüber hinaus wird auch die Erkennung von Objekten erleichtert, da die durch diese dargestellten Gegenstände in dem oben beschriebenen Rahmen ihre objektklassenspezifischen Eigenschaften nicht ändern sollten, so daß bei einem bevorzugten Verfahren eine Zuordnung von Bildpunkten zu einem Objekt nur erfolgt, wenn diese mit den objektklassenspezifischen Eigenschaften des Objekts konsistent sind. Ist eine Eigenschaft dadurch gegeben, daß die Werte eines eine definierende Eigenschaft beschreibenden Parameters innerhalb eines Intervalls liegen, reicht es grundsätzlich, daß ein aus den Bildern bestimmter Parameter innerhalb des vorgegebenen Intervalls bleibt.

Bevorzugt können die Objektklassen daher nach geometrischen Parametern und/oder der Form der erkannten Objekte gebildet werden, wobei insbesondere im Hinblick auf die Verwendung in Fahrzeugen die Ausdehnung und Proportion eines Objekts, die beispielsweise durch Länge und Breite eines das Objekt umschreibenden Rechtecks gegeben sein kann, wesentliche Eigenschaften sind, da hierdurch Objekte mit sehr unterschiedlichem dynamischem Verhalten klassifizierbar sind. Große Kraftfahrzeuge wie zum Beispiel Lastkraftwagen und Busse können von kleinen Kraftfahrzeugen wie zum Beispiel Personenkraftwagen und insbesondere Personen unterschieden werden, die durch unterschiedliche Modelltypen und/oder Werte der Modellparameter beschrieben werden.

Besonders bevorzugt wird bei der Wahl der Objektklassen das mögliche dynamische Verhalten, das heißt die möglichen Bewegungen, von durch die Objekte dargestellten Gegenständen berücksichtigt. Dies ist insbesondere im Hinblick auf die Vorhersage der Position von Objekten von Bedeutung, da die Vorhersage nur unter Berücksichtigung eines möglichst guten Modells für die Bewegung eines Objekts genau erfolgen kann.

Besonders bevorzugt ist es dabei, daß die Modellparameter für wenigstens eines der Objekte wenigstens einen objektklassenabhängigen Modellparameter umfassen, der zur Beschreibung des dynamischen Verhaltens des Objekts dient. Hierbei kann es sich insbesondere um die maximal mögliche Beschleunigung oder einen maximal möglichen Lenkwinkel handeln. Darüber hinaus können als Modellparameter auch Maximalgeschwindigkeiten vorgesehen sein. Bei einer solchen Wahl werden die sehr großen Unterschiede insbesondere zwischen Nutzfahrzeugen, wie Lastkraftwagen und Bussen, Personenkraftwagen sowie Personen gut berücksichtigt, so daß durch entsprechende Wahl des Modelltyps und/oder eines Werts wenigstens eines Modellparameters für den Modelltyp die Beschreibung der zeitlichen Entwicklung der Zustandsparameter verbessert wird.

Die Modellparameter müssen aber nicht nur zur Vorhersage der Bahn des Objekts dienen, sondern können auch die Beschreibung von Unsicherheiten in der Bahn betreffen, die durch entsprechende Varianzen bzw. Kovarianzen bei einer statistischen Beschreibung erfaßbar sind. Bei von Personen gesteuerten Fahrzeugen können solche Unsicherheiten in der Bahn insbesondere durch Steuer- oder Beschleunigungsvorgänge, die von den Personen ausgelöst werden und daher bei der Objekterkennung und -verfolgung nicht vorhersagbar sind, bedingt sein.

Dementsprechend ist bevorzugt für Lebewesen, insbesondere Personen, Fahrzeuge und sonstige Gegenstände jeweils wenigstens eine Objektklasse vorgesehen. Diese unterscheiden sich insbesondere durch ihre maximal mögliche Beschleunigung. Darüber hinaus ist auch im Hinblick auf die sonstigen Gegenstände eine Unterscheidung dahingehend möglich, daß Objekte ortsfest sind, das heißt sich nicht bewegen können.

Bevorzugt kann als Objektklasse für Fahrzeuge eine Objektklasse für Personenkraftwagen, eine für Lastkraftwagen und/oder Busse, sowie eine für Zweiräder vorgesehen sein, da sich diese im Hinblick auf die zur Klassifikation verwendeten, definierenden Eigenschaften durch ihre Ausdehnung und/oder Beschleunigung und im Hinblick auf die Werte von Modellparametern beispielsweise durch die Maximalbeschleunigung und/oder Maximalgeschwindigkeit unterscheiden.

Es ist besonders bevorzugt, daß zur Verfolgung von Objekten auf der Basis vorhergehender Bilder des dem Objekt zugeordneten Modells neue Werte wenigstens für die Position mindestens eines Objekts prädiziert werden, daß für das Objekt unter Verwendung wenigstens eines objektklassenabhängigen Modellparameters ein Suchbereich in dem aktuellen Bild definiert wird, in dem nach Bildpunkten für das Objekt gesucht wird, und daß unter Verwendung des prädizierten Wertes wenigstens der Position des Objekts und der Lage der Bildpunkte in dem aktuellen Bild ein neuer Wert für wenigstens die Position des Objekts bestimmt wird.

Die Suche nach Bildpunkten für das Objekt kann dabei nach einer Zusammenfassung von Bildpunkten zu Segmenten erfolgen, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen. Bei diesem Segmentierungskriterium kann es sich insbesondere um ein Kriterium für einen maximal zulässigen Abstand und/oder einen maximal zulässigen Unterschied einer optischen Eigenschaft, insbesondere der Reflektivität, oder bei Verwendung geschwindigkeitsaufgelöster Bilder um ein Kriterium für eine maximal zulässige Differenz der Relativgeschwindigkeiten handeln. Weiterhin kann bei Verwendung eines Laserscanners auch eine aus Pulsbreiten und/oder -höhen bestimmte Neigung einer Fläche verwendet werden. Bei Verwendung von optischen Eigenschaften kann dabei die direkt zu Bestimmung der Reflektivität verwendete Meßgröße des Sensors, bei einem Laserscanner beispielsweise Pulsbreite und/oder -höhe der reflektierten und detektierten Strahlungspulse verwendet werden.

Bei der Definition des Suchbereichs können insbesondere noch prädizierte Werte der Position verwendet werden. Die Verfolgung der Objekte kann dabei insbesondere auch auf Basis vorhergehender aus Meßwerten, die aus einem Bild gewonnen wurden, bestimmter Werte der Zustandsparameter erfolgen.

Das erfindungsgemäße Verfahren nach der genannten Weiterbildung führt insbesondere zu besser angepaßten Suchbereichen, die damit je nach Objektklasse kleiner sein können als Suchbereiche bei Standardmodellen für alle Objekte, da letztere, um Objekte möglichst sicher zu finden, in jedem Fall sehr groß gewählt werden müssen. Bei diesen einfachen Verfahren ergeben sich nicht nur große Suchbereiche, sondern es treten auch eher Überschneidungen von Suchbereichen auf, die eine relativ komplizierte und zeitaufwendige Behandlung von Bildpunkten in den sich überschneidenden Bereichen erfordern. Die erfindungsgemäß besser angepaßten Suchbereiche dagegen sind kleiner und erlauben daher zum einen aufgrund der kleineren Fläche eine bessere Suche. Zum anderen werden Überschneidungen zwischen Suchbereichen stark reduziert. Dadurch werden komplizierte Berechnungen zur Zuordnung von Bildpunkten oder Segmenten zu einem der den sich überschneidenden Suchbereiche entsprechenden Objekte seltener erforderlich. Weiterhin werden falsche Zuordnungen von Bildpunkten oder Segmenten, die bei zu großen Suchbereichen möglich ist, vermieden.

Besonders bevorzugt wird zur Objektverfolgung ein Kalman-Filter verwendet und wenigstens eine der zur Definition des Suchbereichs verwendeten Varianzen und/oder Kovarianzen der Position für wenigstens ein Objekt in Abhängigkeit von wenigstens einem der objektklassenabhängigen Modellparameter bestimmt. Die bei der Kalman-Filterung verwendeten Meßgrößen umfassen dabei insbesondere die Positionen der Objekte bzw. entsprechender Bezugspunkte der Objekte, die aus einem erfaßten Bild ermittelt werden. Bei der Verwendung eines solchen Kalman-Filters werden Werte der Meßgrößen und die Varianzen und Kovarianzen für die Position eines Objekts vorhergesagt. Der Suchbereich wird dann so definiert, daß das Objekt in dem aktuellen Bild mit einer vorgegebenen Wahrscheinlichkeit in dem Suchbereich aufgefunden wird. Beispielsweise kann hier ein Wert von 99 % gewählt werden. Anhand eines prädizierten Wertes der die Position des Objekts bestimmenden Meßgröße läßt sich dann die Lage des Suchbereichs und anhand der Varianzen bzw. Kovarianzen Form und Größe des Suchbereichs festlegen. Durch die Abhängigkeit der Varianzen bzw. Kovarianzen von objektklassenabhängigen Modellparametern, insbesondere der maximalen Beschleunigung eines Objekts der Klasse, kann der Suchbereich kontrolliert und genau eingeschränkt werden.

Bevorzugt ist wenigstens eine Objektklasse für Gegenstände vorgesehen, die keine Fahrzeuge sind. Für Objekte, denen diese Objektklasse zugeordnet wurde, wird dann ein objektklassenabhängiger Modelltyp und/oder Modellparameter verwendet, nach dem mögliche Bewegungen des Objekts in allen Richtungen gleich behandelt werden. Objektklassen, denen typischerweise solche Modelltypen zugeordnet werden, sind zum Beispiel Objektklassen für Personen und sonstige, nicht näher klassifizierbare Gegenstände, von denen angenommen werden kann, daß sie sich in allen Richtungen gleich wahrscheinlich bewegen können und werden. Insbesondere sind mögliche Beschleunigungen in jeder Bewegungsrichtung gleich. Damit ergeben sich insbesondere bei Verwendung eines Kalman-Filters gleiche Varianzen bzw. Kovarianzen für die Positionen eines Objekts in allen Richtungen. Die Isotropie eines Modells kann häufig auch durch Wahl von Modellparametern erreicht werden.

Weiterhin ist es bevorzugt, daß wenigstens eine Objektklasse für Fahrzeuge vorgesehen ist und daß für Objekte, denen eine der Objektklassen für Fahrzeuge zugeordnet ist, ein Modelltyp verwendet wird, bei dem dem Objekt eine Objektlängsachse zugeordnet wird und Bewegungen des Objekts in Richtung der Objektlängsachse und solche senkrecht zur Richtung der Objektlängsachse unterschiedlich in dem Modelltyp berücksichtigt werden. Hierdurch kann insbesondere berücksichtigt werden, daß die Beschleunigung von Fahrzeugen quer zur Fahrzeuglängsachse bei normalem Fahrverhalten allenfalls aufgrund von Lenkbewegungen erfolgen kann, wodurch eine mögliche Querbeschleunigung zwischen der letzten Messung der Position eines Objekts und einer möglichen vorhergesagten Position des Objekts und damit eine Positionsänderung in dieser Richtung stark eingeschränkt sind. So weist ein Fahrzeug wie ein Personenkraftwagen in Fahrzeuglängsrichtung eine andere maximale Beschleunigung auf als quer dazu.

Grundsätzlich ist es hierbei möglich, daß dem Objekt nicht nur eine Achse sondern auch eine Achsenrichtung zugeordnet wird, und daß Beschleunigungen in Fahrtrichtung und Bremsverzögerungen, das heißt Beschleunigungen entgegen der Fahrtrichtung unterschiedlich behandelt werden. Dies ist je nach Anwendung bevorzugt, da die meisten Fahrzeuge bessere maximale Bremsverzögerungen als maximale Beschleunigungen aufweisen. Insbesondere kann sich hieraus ein günstigerer Suchbereich ergeben. So ist bei Verwendung eines Kalman-Filters, bei dem häufig zur Bestimmung der Varianzen und Kovarianzen der Positionen und Geschwindigkeiten die Beschleunigungen von Fahrzeugen berücksichtigt werden, eine günstige Anpassung des Suchbereichs möglich.

Besonders bevorzugt werden für Objekte, denen eine der Objektklassen für Fahrzeuge zugeordnet ist, Modelltypen verwendet, in denen kinematische Zwangsbedingungen berücksichtigt werden. Hiermit kann der Tatsache Rechnung getragen werden, daß sich Fahrzeuge zumindest im normalen Fahrbetrieb nur auf durch Lenkausschläge bestimmten Bahnen bewegen können, wodurch insbesondere die Prädiktion der Position eines Objekts erleichtert wird. Darüber hinaus kann aber auch wie oben ausgeführt, eine Verkleinerung des Suchbereichs erreicht werden.

Besonders bevorzugt kann als Modelltyp ein Ein- oder Zweispurmodell verwendet werden. Insbesondere das Einspurmodell zeichnet sich durch eine vergleichsweise geringe Anzahl von Zustandsparametern aus, wobei jedoch die für eine Objekterkennung und -verfolgung relevanten Bewegungsformen eines Fahrzeugs berücksichtigbar sind. Wird ein Kalman-Filter verwendet, können in diesen Einspurmodellen insbesondere die nicht stochastischen Beschleunigungen auf den Wert Null gesetzt werden.

Die Zuordnung von Objekten zu Objektklassen kann aufgrund der beschränkten Information in seltenen Einzelfällen unzutreffend sein. Daher wird der Modelltyp und/oder wenigstens einer der Modellparameter wenigstens eines Objekts situationsabhängig adaptiert. Hierdurch können abhängig von gemessenen geometrischen und/oder dynamischen Daten eines Objekts der Modelltyp gewechselt und/oder wenigstens ein Wert wenigstens eines Modellparameters angepaßt werden, was mit einem Wechsel der Objektklasse einhergehen kann, aber nicht unbedingt muß.

So ist eine Anpassung eines Modellparameters ohne einen Wechsel der Objektklasse insbesondere bei einer bevorzugten Weiterbildung des Verfahrens möglich, bei der für wenigstens eine Objektklasse nur ein Wertebereich für den Modellparameter bestimmt ist, wobei ein vorgegebener Standard- bzw. Defaultwert vorgesehen ist, der vor einer ersten Adaption verwendet wird. Der Standardwert kann dabei insbesondere so gewählt sein, daß für Objekte der Objektklasse, die den am häufigsten vorkommenden Gegenständen entsprechen, eine gute Beschreibung des Verhaltens erzielt wird. Damit kann bei der Erstzuweisung eines Modells ein Wert des entsprechenden Modellparameters zugewiesen werden, der jedoch später verbessert werden kann. Insbesondere können sich im Verlauf einer Objektverfolgung aufgrund verschiedener erfaßter Ansichten eines Gegenstands, dem das Objekt entspricht, die Dimensionen des Objekts verändern. Entsprechend der Änderung der Dimension können dann weitere Modellparameter adaptiert werden. Beispielsweise ist es denkbar, bei sehr großen Personenkraftwagen höhere Maximalbeschleunigungen vorzusehen. Eine solche Adaption des Modelltyps und/oder mindestens eines Wertes wenigstens eines Modellparameters kann dann zu einem wesentlich besseren Ergebnis der Objekterkennung und -verfolgung führen. Insbesondere können die oben geschilderten Vorteile eines reduzierten Suchbereichs erreicht werden.

Besonders bevorzugt wird eine Adaption durchgeführt, wenn ein gemessener Wert mindestens eines vorbestimmten Zustandsparameters nicht konsistent ist mit einem vorhergehenden gemessenen Wert oder mit einem auf der Basis vorhergehender Werte des Zustandsparameters prädizierten Wert des vorbestimmten Zustandsparameters. Hierbei kann es sich insbesondere um geometrische Abmessungen handeln, die aufgrund einer Verdeckung eines Gegenstands durch einen anderen Gegenstand oder einer ungünstigen Perspektive zunächst nicht korrekt bestimmt wurden. Darüber hinaus kann es sich auch um ungewöhnliche Geschwindigkeitsänderungen handeln.

Weiterhin ist es bevorzugt, daß eine Adaption des Modelltyps durchgeführt wird, wenn festgestellt wird, daß der optoelektronische Sensor einen Normalbewegungszustand verlassen hat oder in diesen zurückgekehrt ist. Insbesondere in dem Fall, daß der optoelektronische Sensor an einem Fahrzeug befestigt ist, kann der Normalbewegungszustand dadurch definiert sein, daß das Fahrzeug nicht schleudert, das heißt, sich im wesentlichen auf einer durch den Lenkwinkel und die Geschwindigkeit und Beschleunigung des Fahrzeugs bestimmten Bahn bewegt. Bei Verlassen des Normalbewegungszustands ist ein für ein Fahrzeug bevorzugt gewähltes Modell, bei dem kinematische Zwangsbedingungen berücksichtigt werden, von seinem Typ her in der Regel nicht mehr geeignet, die Bewegung hinreichend genau zu beschreiben, so daß in der Regel ein allgemeinerer Modelltyp gewählt werden wird, in dem die Bewegung des Objekts noch erfaßbar ist. Insbesondere im Fall eines Fahrzeugs kann beispielsweise bei Erkennen eines Schleuderzustands ein Übergang von einem Einspurmodell zu einem einfachen isotropen Modell erfolgen, in dem die Bewegung sowohl in Richtung des Fahrzeugs als auch quer zum Fahrzeug gleich behandelt wird.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Weiterer Gegenstand der Erfindung ist ein Verfahren zur Erkennung und Verfolgung von Gegenständen in einem Sichtbereich wenigstens eines Sensors, insbesondere eines Laserscanners, bei dem mit dem Sensor zeitlich aufeinanderfolgende tiefenaufgelöste Bilder wenigstens eines Teils seines Sichtbereichs erfaßt werden, und bei dem die erfaßten Bilder mit dem erfindungsgemäßen Verfahren zur Erkennung und Verfolgung von Objekten verarbeitet werden.

Schließlich ist Gegenstand der Erfindung eine Vorrichtung zur Erkennung und Verfolgung von Objekten mit mindestens einem zur Erfassung geschwindigkeits- oder tiefenaufgelöster Bilder eines Überwachungsbereichs ausgebildeten Sensor, vorzugsweise einem optoelektronischen Sensor, insbesondere einem Laserscanner, dessen Sichtbereich den Überwachungsbereich einschließt, und mit einer Datenverarbeitungseinrichtung, die zur Durchführung des erfindungsgemäßen Verfahrens ausgebildet ist.

Bevorzugt kann die Datenverarbeitungseinrichtung dazu einen Prozessor und eine Speichereinrichtung aufweisen, in der ein erfindungsgemäßes Computerprogramm zur Ausführung auf dem Prozessor gespeichert ist. Die Datenverarbeitungseinrichtung kann dabei als Prozessor besonders bevorzugt einen digitalen Signalprozessor aufweisen.

Bevorzugte Ausführungsformen der Erfindung werden nun beispielhaft anhand der Zeichnungen beschrieben. Es zeigen:

Fig. 1   eine schematische Draufsicht auf ein Fahrzeug mit einem Laserscanner und einen Sichtbereich des Laserscanners, in dem sich ein Gegenstand sowie ein bei der Objektverfolgung benutzter Suchbereich befinden,

Fig. 2   ein Ablaufdiagramm für ein Verfahren zur Erkennung und Verfolgung von Objekten nach einer bevorzugten Ausführungsform der Erfindung, und

Fig. 3   eine schematische Darstellung des Fahrzeugs in Fig. 1 und eines Personenkraftwagens sowie des bei dem erfindungsgemäßen Verfahren verwendeten Suchbereichs für das dem Personenkraftwagen zugeordnete Objekt.

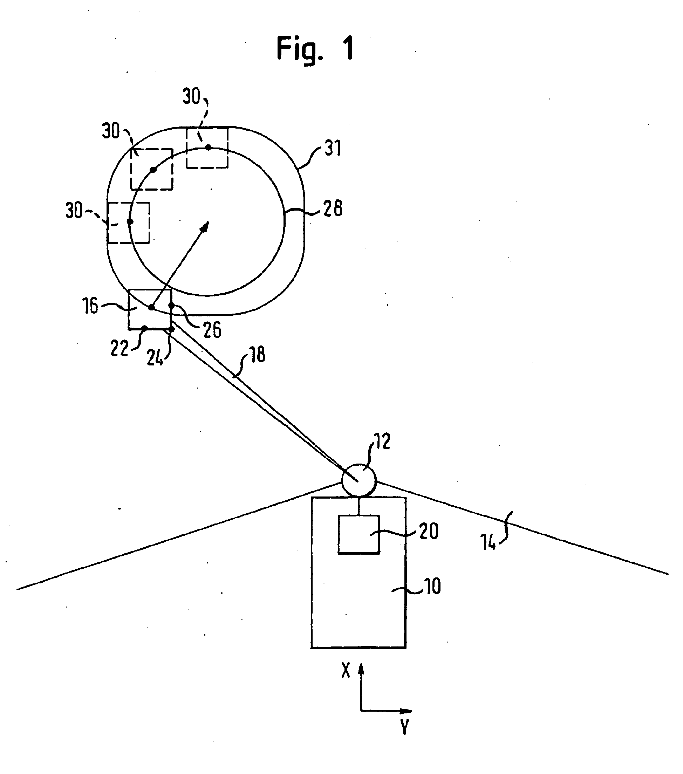

In Fig. 1 ist an der Frontseite eines Fahrzeugs 10 ein Laserscanner 12 angeordnet, dessen Sichtbereich 14 einen Teil des in Fahrtrichtung vor dem Fahrzeug liegenden Bereichs umfaßt. Im Sichtbereich 14 befindet sich ein Gegenstand 16.

Der Laserscanner 12 tastet seinen Sichtbereich 14 mit einem umlaufenden, gepulsten Strahlungsbündel 18 ab und erfaßt die Position von Gegenstandspunkten 22, 24 und 26 des Gegenstands 16, an denen ein Puls des Strahlungsbündels reflektiert wurde, anhand des Winkels, bei dem der Strahlungspuls ausgesandt wurde, und dem Abstand zum Laserscanner 12, der sich aus der Laufzeit des Strahlungspulses von der Abstrahlung bis zum Empfang nach der Reflexion ergibt. Bei einer Abtastung des Sichtbereichs 14 wird somit ein tiefenaufgelöstes Bild erfaßt, das die bei der Abtastung erfaßten Rohdatenelemente bzw. Bildpunkte umfaßt, die zumindest die Koordinaten der Gegenstandspunkte 22, 24 und 26 enthalten, an denen das Strahlungsbündel 18 reflektiert wurde. Die Aktualisierung der vollständigen Bilder erfolgt in einem zeitlichen Abstand T.

Die von dem Laserscanner 12 erfaßten Bilder werden, gegebenenfalls nach einer Korrektur der Rohdatenelemente, an eine Datenverarbeitungseinrichtung 20 in dem Fahrzeug 10 ausgegeben, in der eine Weiterverarbeitung der Bilder stattfindet. Die Datenverarbeitungseinrichtung 20 weist dazu, in den Figuren nicht gezeigt, einen Prozessor und einen Speicher sowie eine Schnittstelle zur Übertragung der Daten von dem Laserscanner auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Zur Erkennung und Verfolgung von Objekten wird ein Objekterkennungs- und -verfolgungsverfahren nach einer bevorzugten Ausführungsform der Erfindung in der Datenverarbeitungseinrichtung 20 ausgeführt. Zur Ob- jekterkennung und -verfolgung wird ein Kalman-Filter verwendet, der in diesem Beispiel in linearisierter Form verwendet wird. Dabei bezeichnet $X^n(k)$ den Vektor mit Zustandsparametern, die den Zustand des Objekts n bei der Iteration k beschreiben und die Positionskoordinaten $x^n(k)$ und $y^n(k)$ eines dem Objekt n zugeordneten Referenzpunkts in einem ortsfesten Koordinatensystem, im Beispiel dem geometrischen Schwerpunkt des Objekts, umfassen, und $Z^n(k)$ den Vektor von Meßgrößen für das Objekt n bei der Messung für die Iteration k, die aus erfaßten Bildern bestimmt und bei der Objekterkennung und -verfolgung verwendet werden. Die Anzahl und Art der Zustandsparameter, die einem Objekt zugeordnet sind, hängt von dem Modelltyp ab, mit dem das Bewegungsverhalten eines Objekts bzw. eines durch das Objekt dargestellten realen Gegenstands beschrieben werden soll.

Die Gleichungen haben folgende Form

$$X^n(k+1) \;=\; F^n\, X^n(k) + u^n(k)$$

$$Z^n(k) \qquad = H^n\, X^n(k) + w^n(k)$$

wobei $F^n$ eine Matrix ist, die die deterministische Zeitentwicklung der Zustandsparameter $X^n$ des Objekts n bestimmt. Mit der Matrix $H^n$ sind die Meßgrößen $Z^n$ aus den Zustandsparametern $X^n$ bestimmbar. $u^n$ und $w^n$ bezeichnen jeweils ein weißes, mittelwertfreies Rauschen für die Zustandsparameter und die Meßgrößen, wobei $u^n$ und $w^n$ unkorreliert sind. Sie weisen aber jeweils durch eine entsprechende Kovarianzmatrix $Q^n$ bzw. $R^n$ gegebene Korrelationen auf.

Das eigentliche Modell im Sinne der Anmeldung wird durch die erste Gleichung und die Kovarianzmatrix $Q^n$

gegeben. Die Angabe des Modells besteht also in der Angabe der Zustandsparameter und der Meßgrößen, sowie von Werten für die Matrizen $F^n$, $H^n$ und $Q^n$. $R^n$ ist im wesentlichen durch die Meßgenauigkeit des Laserscanners 10 bestimmt und wird hier als bekannt vorausgesetzt.

Die Spezifizierung der Modelle anhand von Objektklassen wird nach einer Übersicht über den Verfahrensablauf behandelt.

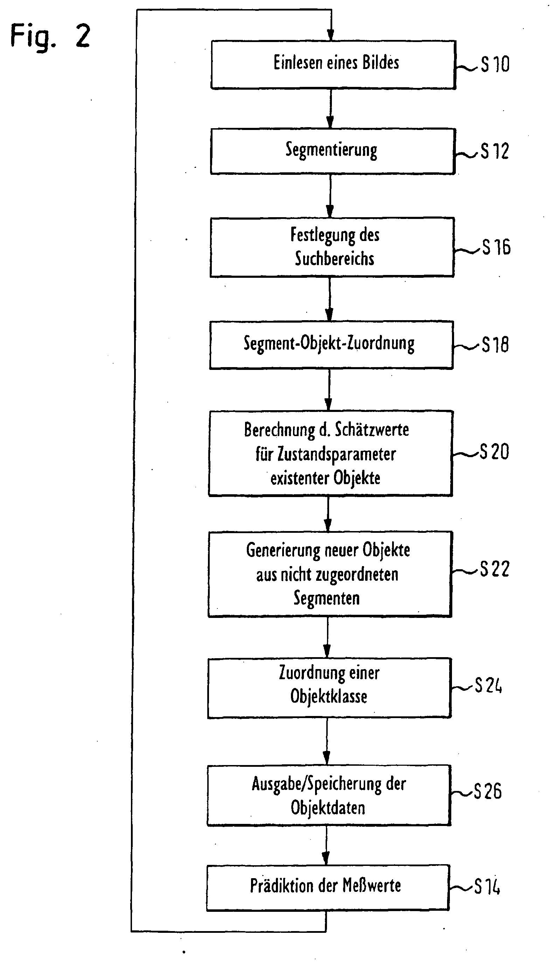

Der Ablauf des Verfahrens ist grob schematisch in Fig. 2 dargestellt.

Bei einer neuen Iteration wird zunächst in Schritt S10 ein neues Bild von dem Laserscanner 12 eingelesen.

Im Schritt S12 wird dann das Bild segmentiert. Dazu werden Bildpunkte zu Segmenten zusammengefaßt, die jeweils einen einzelnen Bildpunkt oder eine Menge aller Bildpunkte umfassen, von denen jeweils mindestens zwei einen Abstand aufweisen, der kleiner als ein vorgegebener Mindestabstand ist, wobei die Segmente untereinander keine gemeinsamen Bildpunkte aufweisen Es können jedoch auch alternativ oder zusätzlich Reflektivitätsunterschiede zur Segmentierung verwendet werden. In Fig. 1 bilden beispielsweise die den Gegenstandspunkten 22, 24 und 26 zugeordneten Rohdatenelemente ein Segment.

Um zu erkennen, welche der im Schritt S12 gebildeten Segmente einem bereits erkannten Objekt zuzuordnen sind, werden Vektoren $\hat{Z}^n(k+1)$ für die prädizierten Meßgrößen und prädizierte Kovarianzmatrizen $\hat{S}^n(k+1)$ für die Meßgrößen verwendet. Diese wurden am Ende der vorhergehenden Iteration k in Schritt S14 mittels bekannter Formeln für die Kalman-Filterung prädiziert. In die Prädiktion der Kovarianzmatrizen $\hat{S}^n(k+1)$ gehen insbesondere die Kovarianzmatrizen $Q^n$ der Zustandsparameter ein.

In Schritt S16 wird dann unter Verwendung der prädizierten Meßgrößen und Kovarianzmatrizen ein Suchbereich festgelegt, in dem nach Bildpunkten bzw. Segmenten für das Objekt gesucht wird. Die Lage des Suchbereichs ergibt sich aus den prädizierten Werten der Meßgrößen für die Position des Objekts. Unter der Annahme, daß die prädizierten Meßwerte normalverteilt sind, kann eine Region angegeben werden, in der der zugehörige Meßwert eines Objekts mit hoher Wahrscheinlichkeit liegen muß. Unter Vorgabe einer Mindestwahrscheinlichkeit $\gamma$, den durch Messung ermittelten Vektor der Meßgrößen $Z^n(k+1)$ in dem Suchbereich zu finden, ergibt sich der Suchbereich für den Schwerpunkt des Objekts aus den entsprechenden Komponenten der Vektoren der Meßgrößen in der Menge aller Vektoren Y, die der Bedingung

$$(Y - \hat{Z}(k+1))\,(\hat{S}^n(k+1))^{-1}\,(Y - \hat{Z}(k+1)) < \gamma$$

genügen. Dieser Bereich entspricht in Fig. 1 für den unten beschriebenen Modelltyp dem gezeigten Kreis 28. Als eigentlicher Suchbereich für Segmente, die den Objekten in dem Iterationsschritt zugeordnet werden können, wird dann der Bereich definiert, der sich ergibt, wenn man, wie in Fig. 1 durch gestrichelte Linien angedeutet, ein Rechteck 30 mit der Orientierung und den Ausmaßen des Objekts mit seinem Schwerpunkt über die Umfangslinie des Suchbereiches 28 für den Schwerpunkt, in Fig. 1 des Kreises, umlaufen läßt und die dadurch abgedeckte Fläche einschließlich der Kreisinnenfläche als Suchbereiche für neue Segmente definiert. Dieser eigentliche Suchbereich ist in Fig. 1 schematisch durch die Kurve 31 dargestellt.

Im Schritt S18 erfolgt dann die Zuordnung von Segmenten zu Objekten.

Darauf werden in Schritt S20 unter Verwendung der zugeordneten Segmente neu berechnete Eigenschaften und Meßgrößen der Objekte und anhand des Kalman-Filters neue Schätzwerte für die Zustandsparameter des Objekts berechnet. Für Objekte, denen keine Segmente zugeordnet werden konnten, wird als neuer Schätzwert für die Zustandsparameter und die Varianzen der zuletzt prädizierte Wert verwendet. Danach wird geprüft, ob die prädizierte Varianz der Meßgrößen für die Position des Objekts einen vorgegebenen Schwellwert übersteigt. Ist dies der Fall, wird das Objekt gelöscht, da es dann als zu unsicher gilt. Ansonsten wird es wie ein normales Objekt weiterbehandelt.

Können bei der Zuordnung von Segmenten zu Objekten im Schritt S18 Segmente keinem Objekt zugeordnet werden, werden im Schritt S22 aus diesen Segmenten neue Objekte gebildet.

Nach Bildung der neuen Objekte wird diesen im Schritt S24 anhand der Größe und Form der Segmente eine Objektklasse zugewiesen. Dazu wird das kleinste Rechteck bestimmt, das alle Punkte des Segments umfaßt, wobei neben einer Änderung der Seitenlängen des Rechtecks auch Drehungen des Rechtecks zugelassen sind. Jeder der Objektklassen ist sowohl für die Länge als auch die Breite eines solchen Rechtecks ein Bereich zulässiger Werte zugeordnet, so daß einem neuen Objekt die entsprechende Objektklasse zugeordnet wird, wenn sowohl Länge als auch Breite in dem für die Objektklasse zulässigen Wertebereich liegen. Gleichzeitig wird den neuen Objekten ein Modell zugeordnet, indem ihnen in Abhängigkeit von der zugeordneten Objektklasse ein objektklassenspezifischer Modelltyp und objektklassenspezifische Werte für entsprechende Modellparameter des Modelltyps zugeordnet werden. Neuen Objekten können weiterhin Bewegungseigenschaften des Objekts betreffende Zustandsparameter, beispielsweise für die Geschwindigkeit zugewiesen werden, wobei deren Werte sich aus Plausibilitätsüberlegungen ergeben können.

Im Schritt S26 werden dann die Schätzwerte für die Objekte ausgegeben bzw. gespeichert.

In Schritt S14 werden dann mittels bekannter Formeln für die Kalman-Filterung Vektoren $\hat{Z}^n(k+1)$ für die prädizierten Meßgrößen und prädizierte Kovarianzmatrizen $\hat{S}^n(k+1)$ für die Meßgrößen prädiziert, woraufhin das Verfahren mit Schritt S10 fortgesetzt wird.

Als Objektklassen sind in diesem Beispiel Objektklassen für Personen und Personenkraftwagen und Lastkraftwagen vorgesehen. Im vorliegenden Beispiel werden die Objektklassen anhand der geometrischen Dimensionen der erkannten Objekte zugewiesen.

Die Objektklasse Person zeichnet sich im Beispiel dadurch aus, daß Gegenstände in der Abtastebene des Laserscanners eine Länge und Breite in einem Intervall von 0,1 m bis 1 m haben. Einem Objekt 1, das dem in Fig. 1 gezeigten Gegenstand 16 entspricht, ist im Beispiel die Objektklasse Person zugeordnet. Da auf der Basis der von dem Laserscanner 12 erfaßten Daten in aller Regel keine Orientierung der Person festgestellt werden kann, werden als Zustandsparameter eines einer Person entsprechenden Objekts der geometrische Objektschwerpunkt, das heißt genauer dessen Koordinaten, die Objektgeschwindigkeit und die Breite und Länge eines das Objekt darstellenden Rechtecks verwendet. Da sich Personen unvorhersehbar in allen möglichen Richtungen bewegen können, wird als deterministischer Teil des Modells eine geradlinige gleichförmige Bewegung des Schwerpunkts, in Fig. 1 angedeutet durch den Pfeil von dem Gegenstand 16 zu dem Suchbereich 28, angenommen, wobei unvorhersehbare Schwankungen in den Positionen des Schwerpunkts in allen Richtungen gleich wahrscheinlich sind. Hierdurch können insbesondere Beschleunigungen in der Bewegung der Person berücksichtigt werden.

Als Zustandsparameter ergeben sich damit die Positionen x und y in x-und y-Richtung, die Geschwindigkeiten in den beiden Koordinatenrichtungen $v_x$, $v_y$, sowie die Breite b und Länge 1 eines das Objekt darstellenden Rechtecks, wobei die Koordinaten und Geschwindigkeiten in dem kartesischen Koordinatensystem mit x- und y-Achsen angegeben sind. Der Vektor X der Zustandsparameter für die Iteration k lautet daher

$$X^1(k) = (x(k),\ y(k),\ v_x(k),\ v_y(k),\ b(k),\ l(k)).$$

Die Matrix $F^1$ hat dann die Form

$$F^1 = \begin{pmatrix} 1 & 0 & T & 0 & 0 & 0 \\ 0 & 1 & 0 & T & 0 & 0 \\ 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \end{pmatrix}.$$

Wie bereits ausgeführt, werden durch das Rauschen w unter anderem Bewegungen aufgrund nicht vorhersehbarer Beschleunigungen des Gegenstands 16, d. h. hier einer Person, berücksichtigt. Die Kovarianzmatrix $Q^1$ lautet daher:

$$Q^1 = \begin{pmatrix} \left(\frac{1}{2}aT^2\right)^2 & 0 & \frac{1}{2}a^2T^3 & 0 & 0 & 0 \\ 0 & \left(\frac{1}{2}aT^2\right)^2 & 0 & \frac{1}{2}a^2T^3 & 0 & 0 \\ \frac{1}{2}a^2T^3 & 0 & (aT)^2 & 0 & 0 & 0 \\ 0 & \frac{1}{2}a^2T^3 & 0 & (aT)^2 & 0 & 0 \\ 0 & 0 & 0 & 0 & \sigma_{bb} & 0 \\ 0 & 0 & 0 & 0 & 0 & \sigma_{ll} \end{pmatrix}.$$

Hierbei bezeichnet a die maximal mögliche Beschleunigung für ein Objekt der Objektklasse Person. Die Varianzen und Kovarianzen ergeben sich daraus, daß aufgrund einer maximalen Beschleunigung in der Zeit T maximal die Strecke 1/2 a·$T^2$ zurückgelegt bzw. sich die Geschwindigkeit um maximal a·T verändert haben kann. Durch Produktbildung ergeben sich Matrixelemente für die Varianzen und Kovarianzen der Koordinaten und der zugehörigen Geschwindigkeiten, wobei die Nichtdiagonalterme sich daraus ergeben, daß eine Geschwindigkeitsänderung um a·T mit einer entsprechenden Änderung der Position von 1/2 a·$T^2$ korreliert ist. Als Wert für a wird in der Objektklasse Person etwa 2 m/$s^2$ angenommen. $\sigma_{bb}$ und $\sigma_{ll}$ sind die Varianzen für die Breite und Länge des ein Objekt umfassenden Rechtecks und für diese Klasse durch die Quadrate der Größe der objektklassenspezifischen Intervalle für die Breite und die Länge, die sich jeweils von 0,1 m bis 1 m erstrecken, gegeben.

Als Meßwerte für den Kalman-Filter werden die Koordinaten x und y des Objekts und die Breite b und Länge 1 des das Objekt umschreibenden Rechtecks verwendet. Das Rechteck ist das Rechteck, das die dem Objekt zuzuordnenden Segmente möglichst eng umschließt. Daher lautet der Vektor der Meßgrößen $Z^1$=(x,y, b, l) und die Matrix H hat die Form

$$H^1 = \begin{pmatrix} 1 & 0 & 0 & 0 & 0 & 0 \\ 0 & 1 & 0 & 0 & 0 & 0 \\ 0 & 0 & 0 & 0 & 1 & 0 \\ 0 & 0 & 0 & 0 & 0 & 1 \end{pmatrix}$$

Die Kovarianzmatrix $R^1$ ist im wesentlichen durch das Auflösungsvermögen bzw. die Meßgenauigkeit des Laserscanners 12 gegeben und muß hier nicht genauer beschrieben werden.

Aufgrund der Symmetrien der Matrizen ergibt sich dann der in Fig. 1 gezeigte kreisförmige Suchbereich 28 für den Schwerpunkt. Der Mittelpunkt des Suchbereichs für den Schwerpunkt ergibt sich aus den Koordinaten in dem Vektor der prädizierten Meßgröße $Z^1$. Er ist aufgrund der angenommenen gleichförmigen Bewegung der Person 16 gegenüber der letzten Position, wie durch den Pfeil in Fig. 1 angedeutet, verschoben. Der Suchbereich für Segmente wird, wie in Fig. 1 durch die gestrichelt gezeigten Rechtecke 30 angedeutet, erhalten, indem ein Rechteck mit Breitenwerten und Längenwerten des Vektors der prädizierten Meßgrößen mit seinem Schwerpunkt auf der Begrenzungslinie des Suchbereichs 28 für den Schwerpunkt bewegt wird und die resultierende, von dem bewegten Rechteck 30 und dem Suchbereich 28 für den Schwerpunkt abgedeckte Fläche als Suchbereich 31 für Segmente festgelegt wird.

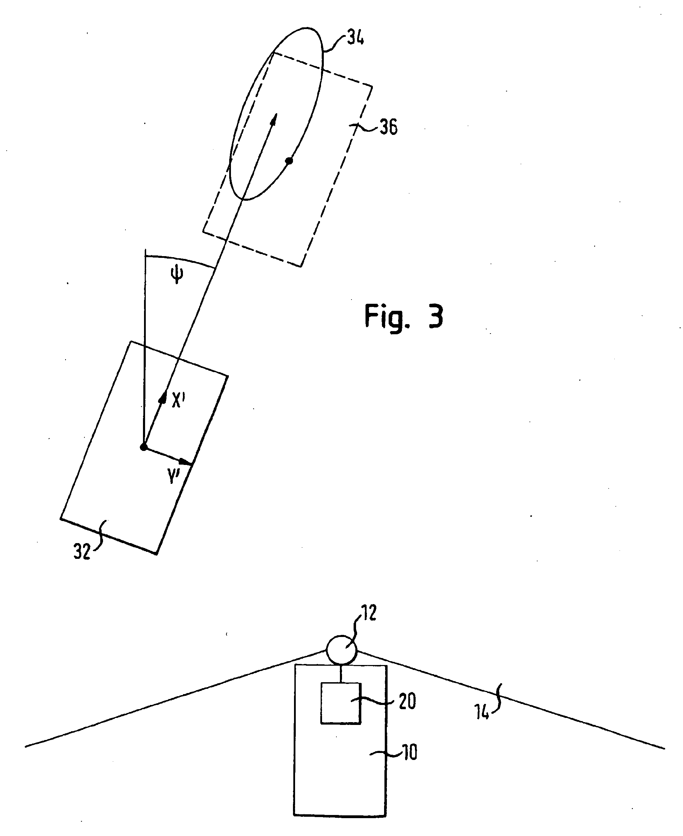

In Fig. 3 befindet sich im Sichtbereich 14 des Laserscanners 12 statt einer Person 16, die durch ein Objekt der Objektklasse Person dargestellt wird, ein Personenkraftwagen 32, der durch ein Objekt der Objektklasse Personenkraftwagen dargestellt wird. Einem Objekt wird diese Objektklasse zugewiesen, wenn ein die Bildpunkte umschreibendes Rechteck kleinster Ausdehnung eine kürzere Seite mit Längen zwischen 1 m und 2 m und eine längere Seite mit Längen zwischen 3 m und 5,5 m aufweist.

Der Zustand des dem Personenkraftwagen 32 zugeordneten Objekts 2 wird ebenfalls durch die Zustandsparameter Koordinaten x, y und Geschwindigkeiten $v_x$ und vy des Schwerpunkts des Objekts, einen Orientierungswinkel $\psi$ zwischen der Längsachse des Personenkraftwagens 28 und der Fahrzeuglängsachse des Fahrzeugs 10, das den Laserscanner 12 trägt, sowie, wie oben, die Breite und Länge des Objekts spezifiziert, die in dieser Reihenfolge die

Komponenten des Zustandsvektors $X^2$ bilden.

Wie oben wird angenommen, daß sich der Personenkraftwagen 32 bis auf Schwankungen, die durch Beschleunigung und Lenkbewegungen des Fahrers verursacht sind, geradlinig und gleichförmig bewegt. Der deterministische Anteil der zeitliche Änderung $d\psi/dt$ wird zu Null angenommen, was konsistent mit der Annahme ist, daß der Personenkraftwagen sich deterministisch geradlinig gleichförmig bewegt.

Die Matrix $F^2$ lautet daher

$$F^2 = \begin{pmatrix} 1 & 0 & T & 0 & 0 & 0 & 0 \\ 0 & 1 & 0 & T & 0 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \end{pmatrix}.$$

Als Meßgrößen werden die Koordinaten x und y des Schwerpunkts, der Winkel $\psi$ und wiederum die Länge und Breite des Objekts, bestimmt über das kleinste Rechteck, das die dem Objekt zugeordneten Bildpunkte umfaßt, verwendet, die in dieser Reihenfolge die Komponenten des Meßvektors $Z^2$ bilden.

Die Matrix $H^2$ hat daher die Form

$$H^2 = \begin{pmatrix} 1 & 0 & 0 & 0 & 0 & 0 & 0 \\ 0 & 1 & 0 & 0 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \end{pmatrix}.$$

In dem Modelltyp wird weiter davon ausgegangen, daß die Zeitentwicklung des Winkels $\psi$ unabhängig von der Richtung der Geschwindigkeiten $v_x$ und $v_y$ ist.

Die Varianzen und Kovarianzen für die entsprechenden Rauschterme für die Schwerpunktskoordinaten werden bei diesem Beispiel für Richtungen parallel zur Längsachse des Personenkraftwagens 32 und senkrecht dazu unterschiedlich behandelt. Dazu werden die Varianzen und Kovarianzen in einem rechtwinkligen x'-y'-Koordinatensystem angegeben, dessen eine Achse durch die Längsachse des Objekts gebildet wird, das den Personenkraftwagen 32 darstellt. Diese werden dann durch Drehung um den Winkel $\psi$ in das Koordinatensystem des Fahrzeugs 10 und von dort gegebenenfalls durch eine weitere Drehung in das ortsfeste Koordinatensystem überführt, in dem die Schwerpunktskoordinaten angegeben sind. Zur besseren Lesbarkeit werden im folgenden die Striche für die Koordinatenrichtung fortgelassen.

Ein Personenkraftwagen kann sich in einem normalen Fahrzustand nicht beliebig quer zu seiner Längsachse bewegen. Seine Bewegung in dieser Richtung ist vielmehr zusammen mit einer Bewegung in Längsrichtung möglich, da ein Lenkwinkel von 90˚ nicht vorgesehen ist. Hierdurch ergeben sich für die Bewegung des Fahrzeugs kinematische Zwangsbedingungen.

In einer einfachen Näherung geht man davon aus, daß ein Fahrzeug der Objektklasse Personenkraftfahrzeug in Fahrtrichtung maximal mit einer Beschleunigung a von 10 m/s$^2$ beschleunigt werden kann. Weiter wird angenommen, daß ein Bewegung quer zur Fahrtrichtung nur durch einen Lenkeinschlag mit einem maximalen Lenkwinkel $\delta_{max}$ von etwa 30˚ möglich ist, wobei eine gewisse maximale Geschwindigkeit $v_s$, ab der ein Personenkraftwagen ins Schleudern gerät, nicht überschritten wird.

Die Varianzen und die Kovarianzen für die Schwerpunktskoordinate und -geschwindigkeit in Richtung der Längsachse des Personenkraftwagens 32, die auf die Beschleunigung a zurückgehen, ergeben sich wie oben aus den Verschiebungen $q_{xa} = \frac{1}{2}\,aT^2$ und $q_{vxa} = aT$ durch Produktbildung.

Eine Bewegung auf einer Kreisbahn wird davon als unabhängig angenommen. Bei einer Bewegung des Personenkraftwagens auf einer Kreisbahn mit dem kleinstmöglichen Radius $R_{min}$, der in der Näherung eines Einspurmodells bei neutralem Fahrverhalten durch den Quotienten aus Achsabstand L und maximalem Lenkwinkel $\delta_{max}$ gegeben ist, ist unter der Annahme einer gleichförmigen Kreisbewegung die maximale Geschwindigkeitsänderung $q_{vy}$ in Richtung senkrecht zu der Längsachse durch $v_s \sin(v_s T/R) = v_s \sin(K \delta_{max})$ mit $K= v_s T/L$ und die entsprechende Verschiebung $q_y$ durch $L(1-\cos(K \delta_{max}))/\delta_{max}$ gegeben. Die entsprechende Geschwindigkeitsänderung $q_{vxk}$ durch die Kreisbewegung bzw. die damit verbundene Verschiebung $q_{xk}$ in Längsrichtung sind $v_s(1-\cos(K\delta_{max}))$ bzw. $L\sin(K \delta_{max})/\delta_{max}$. Wie oben ergeben sich dann entsprechende Varianzen und Kovarianzen durch Produktbildung. Die maximale Änderung des Orientierungswinkels $\psi$ durch Kreisbewegung ergibt sich in der gleichen Näherung zu $K\delta_{max}$, die Varianz $\sigma_{PP}$ also zu $(K\delta_{max})^2$. Korrelationen zwischen der Schwerpunktsbewegung und dem Orientierungswinkel $\psi$ werden hierbei nicht angenommen. Als Werte für $v_S$ und L können entsprechende Daten für typische Personenkraftwagen verwendet werden.

Die Kovarianzmatrix $Q^2$ könnte dann beispielsweise näherungsweise lauten

$$Q^2 = \begin{pmatrix} q_{xa}{}^2 + q_{xk}{}^2 & q_{xk}q_y & q_{vxa}q_{xa} + q_{vxk}q_{xk} & q_{xk}q_{vy} & 0 & 0 & 0 \\ q_{xk}q_y & q_y{}^2 & q_y q_{vxk} & q_y q_{vy} & 0 & 0 & 0 \\ q_{vxa}q_{xa} + q_{vxk}q_{xk} & q_{vxk}q_y & q_{vxa}{}^2 + q_{vxk}{}^2 & q_{vxk}q_{vy} & 0 & 0 & 0 \\ q_{vxk}q_y & q_{vyk}q_y & q_{vy}q_{vxk} & q_{vy}{}^2 & 0 & 0 & 0 \\ 0 & 0 & 0 & 0 & \sigma_{pp} & 0 & 0 \\ 0 & 0 & 0 & 0 & 0 & \sigma_{bb} & 0 \\ 0 & 0 & 0 & 0 & 0 & 0 & \sigma_{ll} \end{pmatrix},$$

$\sigma_{bb}$ und $\sigma_{ll}$ sind die Varianzen für die Breite und Länge des ein Objekt umfassenden Rechtecks und für diese Objektklasse durch die Quadrate der Größe der objektklassenspezifischen Intervalle für die Breite und Länge gegeben. Die Intervalle für die Breite und die Länge sind im Beispiel durch die Bereiche von 1 m bis 2 m bzw. von 3 m bis 5,5 m gegeben.

Hierdurch ergibt sich, wie in Fig. 3 grob schematisch gezeigt, für diese Klasse ein elliptischer Suchbereich 34 für den Schwerpunkt, der daher wesentlich kleiner als ein entsprechender kreisförmiger Suchbereich ist. Wie oben ergibt sich der Suchbereich für Bildpunkte bzw. Segmente durch den Suchbereich 34 für den Schwerpunkt und die durch eine Bewegung des gestrichelt gezeichneten Rechtecks 36 überdeckte Fläche, bei der das Rechteck 36 mit seinem Schwerpunkt entlang des Umfangs des Suchbereichs 34 für den Schwerpunkt bewegt wird.

Hierdurch wird die Zuordnung von Segmenten zu zwei nahe beieinanderliegenden Objekten wesentlich erleichtert, da eine Überschneidung der Suchbereiche wesentlich seltener auftritt und daher wesentlich häufiger eine eindeutige Zuordnung der Segmente ohne weitere Plausibilitätsprüfungen möglich ist.

Es ist weiterhin eine Objektklasse für Lastkraftwagen vorgesehen, die sich von der für Personenkraftwagen durch die Angabe anderer Längen- und Breitenintervalle sowie anderer Werte für die Modellparameter a, $v_s$ und $\delta_{max}$ unterscheidet, wobei jedoch der oben beschriebene Modelltyp der gleiche ist wie bei Personenkraftwagen. Ein Objekt wird der Klasse Lastkraftwagen zugeordnet, wenn dessen Länge in einem Intervall zwischen 5 m und 20 m und dessen Breite im Intervall von 2 m bis 3 m liegt.

Da die maximale Beschleunigung für Lastkraftwagen einen wesentlich geringeren Wert von etwa 1 m/s$^2$ hat, als Personenkraftwagen, wird sich als Suchbereich eine weniger ausgeprägte Ellipse als im Fall eines Objekts der Klasse Personenkraftwagen ergeben.

Bei dem Modelltyp für Personenkraftwagen und Lastkraftwagen werden die Orientierung des Fahrzeugs und die Bewegungsrichtung unabhängig behandelt. Dies ermöglicht es, auf einfache Weise Schleuderzustände festzustellen, indem überprüft wird, ob der Winkel des Vektors der Personenkraftwagengeschwindigkeit bis auf die für Kraftfahrzeuge üblichen Abweichungen mit dem Orientierungswinkel $\psi$ übereinstimmt.

Bei einer weiteren Ausführungsform ist daher eine vierte Objektklasse für unbekannte Gegenstände vorgesehen, die dadurch definiert ist, daß sie allen Objekten zugeordnet wird, denen keine andere Objektklasse zugeordnet werden kann. Nach Schritt S14 und vor Schritt S10 wird überprüft, ob der Winkel des Vektors der Personenkraftwagengeschwindigkeit bis auf die für Kraftfahrzeuge üblichen Abweichungen mit dem Orientierungswinkel $\psi$ übereinstimmt. Ist dies nicht der Fall, wird das Modell aufgegeben. Dem Objekt wird die Objektklasse für unbekannte Gegenstände zugeordnet. Für Objekte dieser Objektklasse wird der gleiche Modelltyp verwendet wie für Objekte der Objektklasse Personen, wobei jedoch keine Beschränkung der Länge und Breite vorgesehen und die Beschleunigungen und damit die Varianzen und Kovarianzen wesentlich größer gewählt sind.

In diese Objektklasse für unbekannte Gegenstände werden auch Objekte eingeordnet, denen nur ein oder zwei Bildpunkte zugeordnet sind, und die sich in einer großen Entfernung von dem Laserscanner befinden. Solche Objekte können aufgrund der begrenzten Auflösung des Laserscanners bei großen Entfernungen nämlich nicht genauer klassifiziert werden. Insbesondere ist eine Zuordnung einer Orientierung anhand der Meßdaten nicht möglich. Eine solche könnte nur aus Annahmen über die Fahrzeuggeschwindigkeit relativ zur Lage der Längsachse des Fahrzeugs abgeleitet werden.

**Bezugszeichenliste**

| | |
|---|---|
| 10 | Fahrzeug |
| 12 | Laserscanner |
| 14 | Sichtbereich |
| 16 | Person |
| 18 | Strahlungsbündel |
| 20 | Datenverarbeitungseinrichtung |
| 22 | Gegenstandspunkt |
| 24 | Gegenstandspunkt |
| 26 | Gegenstandspunkt |
| 28 | Suchbereich für Schwerpunkt |
| 30 | Rechteck |
| 31 | Suchbereich für Segmente |
| 32 | Personenkraftwagen |
| 34 | Suchbereich |
| 36 | Rechteck |

**Patentansprüche**

1.  Verfahren zur Erkennung und Verfolgung von Objekten auf der Basis von bevorzugt geschwindigkeits- oder tiefenaufgelösten Bildern von Gegenständen (16, 32) in einem Sichtbereich wenigstens eines, insbesondere an einem Fahrzeug (10) angeordneten, Sensors, insbesondere eines Laserscanners (12), bei dem die Erkennung und Verfolgung unter Verwendung eines jeweils einem der Objekte zugeordneten Modells für die zeitliche Entwicklung von Zustandsparametern erfolgt, die wenigstens eine sensorspezifische Eigenschaft des Objekts beschreiben, wobei das Modell einen Modelltyp hat und durch wenigstens einen Modellparameter parametrisierbar ist, wobei

    - zur Klassifizierung von Objekten mehrere Objektklassen vorgesehen werden, die wenigstens eine Eigenschaft von Objekten betreffen, die aus wenigstens einem der tiefenaufgelösten Bilder bestimmbar ist,
    - mindestens einem Objekt eine der Objektklassen zugeordnet ist, und
    - dem Objekt in Abhängigkeit von der zugeordneten Objektklasse ein Modelltyp und ein Wert für den entsprechenden Modellparameter zugeordnet werden,

    **dadurch gekennzeichnet,**
    **daß** der Modelltyp und/oder, wenigstens einer der Modellparameter wenigstens eines Objekts ohne einen Wechsel der Objektklasse situationsabhängig adaptiert wird.

2.  Verfahren nach Anspruch 1,
    **dadurch gekennzeichnet,**
    **daß** die Modellparameter für wenigstens eines der Objekte wenigstens einen objektklassenabhängigen Parameter umfassen, der zur Beschreibung des dynamischen Verhaltens des Objekts dient.

3.  Verfahren nach Anspruch 1 oder 2,
    **dadurch gekennzeichnet,**
    **daß** für Lebewesen, insbesondere Personen (16), für Fahrzeuge (32) und für sonstige Gegenstände jeweils wenigstens eine Objektklasse vorgesehen ist.

4.  Verfahren nach einem der vorhergehenden Ansprüche,
    **dadurch gekennzeichnet,**

**daß** zur Verfolgung von Objekten auf der Basis vorhergehender Bilder des dem Objekt zugeordneten Modells neue Werte wenigstens für die Position mindestens eines Objekts prädiziert werden,

**daß** für das Objekt unter Verwendung wenigstens eines objektklassenabhängigen Modellparameters ein Suchbereich (28, 34) in dem aktuellen Bild definiert wird, in dem nach Bildpunkten für das Objekt gesucht wird, und

**daß** unter Verwendung des prädizierten Wertes wenigstens der Position des Objekts und der Lage der Bildpunkte in dem aktuellen Bild ein neuer Wert für wenigstens die Position des Objekts bestimmt wird.

5. Verfahren nach Anspruch 4,
   **dadurch gekennzeichnet,**
   **daß** zur Objektverfolgung ein Kalman-Filter verwendet wird, und wenigstens eine der zur Definition des Suchbereichs (28, 34) verwendeten Varianzen und/oder Kovarianzen der Position für wenigstens ein Objekt in Abhängigkeit von wenigstens einem der objektklassenabhängigen Modellparameter bestimmt wird.

6. Verfahren nach einem der vorhergehenden Ansprüche,
   **dadurch gekennzeichnet,**
   **daß** wenigstens eine Objektklasse für Gegenstände (16), die keine Fahrzeuge sind, vorgesehen ist, und
   **daß** für Objekte, denen diese Objektklasse zugeordnet wurde, ein objektklassenabhängiger Modelltyp und/oder Modellparameter verwendet wird, nach dem mögliche Bewegungen des Objekts in allen Richtungen gleich behandelt werden.

7. Verfahren nach einem der vorhergehenden Ansprüche,
   **dadurch gekennzeichnet,**
   **daß** für Objekte, denen eine der Objektklassen für Fahrzeuge (32) zugeordnet ist, ein Modelltyp verwendet wird, bei dem dem Objekt eine Objektlängsachse zugeordnet wird, und
   **daß** Bewegungen des Objekts in Richtung der Objektlängsachse und solche senkrecht zur Richtung der Objektlängsachse unterschiedlich in dem Modelltyp berücksichtigt werden.

8. Verfahren nach Anspruch 7,
   **dadurch gekennzeichnet,**
   **daß** für Objekte, denen eine der Objektklassen für Fahrzeuge zugeordnet ist, ein objektklassenspezifischer Modelltyp verwendet wird, in dem kinematische Zwangsbedingungen berücksichtigt werden.

9. Verfahren nach Anspruch 8,
   **dadurch gekennzeichnet,**
   **daß** ein Ein- oder Zweispurmodell verwendet wird.

10. Verfahren nach einem der vorhergehenden Ansprüche,
    **dadurch gekennzeichnet,**
    **daß** für wenigstens eine Objektklasse ein Wertebereich für den adaptierbaren Modellparameter bestimmt ist, wobei ein vorgegebener Standard- bzw. Defaultwert vorgesehen ist, der vor einer ersten Adaption verwendet wird.

11. Verfahren nach einem der vorhergehenden Ansprüche,
    **dadurch gekennzeichnet,**
    **daß** eine Adaption durchgeführt wird, wenn ein gemessener Wert mindestens eines vorbestimmten Zustandsparameters nicht konsistent ist mit einem vorhergehenden gemessenen Wert oder mit einem Wert des vorbestimmten Zustandsparameters, der auf der Basis vorhergehender Werte der Zustandsparameter prädiziert wurde.

12. Verfahren nach einem der vorhergehenden Ansprüche,
    **dadurch gekennzeichnet,**
    **daß** eine Adaption durchgeführt wird, wenn festgestellt wird, daß der Sensor (12) einen Normalbewegungszustand verlassen hat oder in diesen zurückgekehrt ist.

13. Computerprogramm mit Programmcode-Mitteln, um das Verfahren nach einem der Ansprüche 1 bis 12 durchzuführen, wenn das Programm auf einem Computer ausgeführt wird.

14. Computerprogrammprodukt mit Programmcode-Mitteln, die auf einem computerlesbaren Datenträger gespeichert sind, um das Verfahren nach einem der Ansprüche 1 bis 12 durchzuführen, wenn das Computerprogrammprodukt auf einem Computer ausgeführt wird.

**15.** Vorrichtung zur Erkennung und Verfolgung von Objekten mit mindestens einem zur Erfassung bevorzugt geschwindigkeits- oder tiefenaufgelöster Bilder eines Überwachungsbereichs (14) ausgebildeten Sensor, insbesondere einem Laserscanner (12), dessen Sichtbereich (14) den Überwachungsbereich einschließt, und mit einer Datenverarbeitungseinrichtung (20), umfassend:

- Mittel zur Erkennung und Verfolgung von Objekten unter Verwendung eines jeweils einem der Objekte zugeordneten Modells für die zeitliche Entwicklung von Zustandsparametern, die wenigstens eine sensorspezifische Eigenschaft des Objekts beschreiben, wobei das Modell einen Modelltyp hat und durch wenigstens einen Modellparameter parametrisierbar ist, und
- Mittel zur Klassifizierung von Objekten anhand mehrerer Objektklassen, die wenigstens eine Eigenschaft von Objekten betreffen, die aus wenigstens einem der tiefenaufgelösten Bilder bestimmbar ist, wobei mindestens einem Objekt eine der Objektklassen und dem Objekt in Abhängigkeit von der zugeordneten Objektklasse ein Modelltyp und ein Wert für den entsprechenden Modellparameter zugeordnet ist,

**gekennzeichnet durch**
Mittel zur situationsabhängigen Adaption des Modelltyps und/oder wenigstens eines der Modellparameter wenigstens eines Objekts ohne einen Wechsel der Objektklasse.

**Claims**

**1.** A method for the recognition and tracking of objects based on images of real objects (16, 32), preferably speed resolved or depth resolved images, in a range of view of at least one sensor, in particular a laser scanner (12), in particular arranged at a vehicle (10), wherein the recognition and detection takes place while using a model respectively associated with one of the objects for the development over time of state parameters which describe at least one sensor-specific property of the object, wherein the model has a model type and can be parameterized by at least one model parameter, wherein

- a plurality of object classes are provided for the classification of objects which relate to at least one property of objects which can be determined from at least one of the depth resolved images;
- one of the object classes is associated with at least one object; and
- a model type and a value for the corresponding model parameter are associated with the object in dependence on the associated object class,

**characterised in that**
the model type and/or at least one of the model parameters of at least one object are adapted in dependence on the situation without changing the object class.

**2.** A method in accordance with claim 1, **characterised in that** the model parameters for at least one of the objects include at least one parameter dependent on the object class which serves for the description of the dynamic behaviour of the object.

**3.** A method in accordance with claim 1 or claim 2, **characterised in that** at least one respective object class each is provided for living beings, in particular persons (16), for vehicles (32) and for other real objects.

**4.** A method in accordance with any one of the preceding claims, **characterised in that** new values are predicated at least for the position of at least one object for the tracking of objects based on preceding images of the model associated with the object;
**in that** a search zone (28, 34) for the object is defined using at least one model parameter dependent on the object class in the then current image in which picture elements for the object are searched for; and
a new value is determined for at least the position of the object using the predicated value of at least the position of the object and the location of the picture elements in the then current image.

**5.** A method in accordance with claim 4, **characterised in that** a Kalman filter is used for the object tracking and at least one of the variances used for the definition of the search zone (28, 34) and/or covariances of the position for at least one object is determined in dependence on at least one of the model parameters depending on the object class.

6.  A method in accordance with any one of the preceding claims, **characterised in that** at least one object class is provided for real objects (16) which are not vehicles; and
    **in that** a model type and/or model parameter dependent on the object class is/are used for objects with which this object class was associated according to which possible movements of the object in all directions are treated equally.

7.  A method in accordance with any one of the preceding claims, **characterised in that** a model type in which an longitudinal object axis is associated with the object is used for objects with which one of the object classes for vehicles (32) is associated; and **in that** movements of the object in the direction of the longitudinal axis of the object and movements perpendicular to the direction of the longitudinal axis of the object are taken into account differently in the model type.

8.  A method in accordance with claim 7, **characterised in that** a model type specific to an object class and in which kinematic compulsory conditions are taken into account is used for object with which one of the object classes for vehicles is associated.

9.  A method in accordance with claim 8, **characterised in that** a one-track or two-track model is used.

10. A method in accordance with any one of the preceding claims, **characterised in that** a value range for the adaptable model parameter is determined for at least one object class, with a preset standard value or default value being provided which is used before a first adaptation.

11. A method in accordance with any one of the preceding claims, **characterised in that** an adaptation is carried out when a measured value of at least one predetermined state parameter is not consistent with a preceding measured value or with a value of the predetermined state parameter which was predicated on the basis of preceding values of the state parameters.

12. A method in accordance with any one of the preceding claims, **characterised in that** an adaptation is carried out when it is found that the sensor (12) has left a normal movement state or has returned to it.

13. A computer program with program code means to carry out the method in accordance with any one of the claims 1 to 12, when the program is carried out on a computer.

14. A computer program product with program code means which are stored on a computer readable data carrier to carry out the method in accordance with any one of claims 1 to 12, when the computer program product is carried out on a computer.

15. An apparatus for the recognition and tracking of objects having at least one sensor, in particular a laser scanner (12), designed for the detection of preferably speed resolved or depth resolved images of a monitoring zone (14), the range of view (14) of said sensor including the monitored zone, and having a data processing device (20), comprising:

    - means for the recognition and detection of objects using a model respectively associated with one of the objects for the development over time of state parameters which describe at least one sensor-specific property of the object, wherein the model has a model type and can be parameterized by at least one model parameter; and
    - means for the classification of objects with reference to a plurality of object classes which relate to at least one property of objects which can be determined from at least one of the depth resolved images, wherein one of the object classes is associated with at least one object and a model type and a value for the corresponding model parameter are associated with the object in dependence on the associated object class,

    **characterized by**
    means for the situation dependent adaptation of the model type and/or of at least one of the model parameters of at least one object without changing the object class.

**Revendications**

1.  Procédé pour la reconnaissance et la poursuite d'objets sur la base d'images, de préférence à résolution de vitesse ou de profondeur, d'articles (16, 32) dans une zone de visibilité d'au moins un capteur agencé en particulier sur un véhicule (10), en particulier d'un scanner laser (12), dans lequel la reconnaissance et la poursuite a lieu en utilisant un modèle respectif associé à l'un des objets pour le développement temporel de paramètres d'état, qui décrivent au moins une propriété, spécifique au capteur, de l'objet, le modèle ayant un type de modèle et étant susceptible d'être paramétré par au moins un paramètre de modèle, dans lequel

- pour la classification d'objets sont prévues plusieurs classes d'objets qui concernent au moins une propriété d'objets qui peut être déterminée à partir d'au moins une des images à résolution de profondeur,
- une des classes d'objets est associée à au moins un objet, et
- un type d'objet et une valeur pour le paramètre de modèle correspondant sont associés à l'objet en fonction de la classe d'objets associée,

**caractérisé en ce que**
le type de modèle et/ou au mois un des paramètres de modèles d'au moins un objet est adapté en fonction de la situation sans un changement de la classe d'objets.

2. Procédé selon la revendication 1,
   **caractérisé en ce que**
   les paramètres de modèles pour au moins un des objets comprennent au moins un paramètre en fonction de la classe d'objets, lequel sert à décrire le comportement dynamique de l'objet.

3. Procédé selon la revendication 1 ou 2,
   **caractérisé en ce que**
   il est prévu au moins une classe d'objets respective pour des êtres vivants, en particulier pour des personnes (16), pour des véhicules (32) ou pour autres articles.

4. Procédé selon l'une quelconque des revendications précédentes,
   **caractérisé en ce que**
   pour la poursuite d'objets sur la base d'images précédentes du modèle associé à l'objet on prédit des nouvelles valeurs au moins pour la position d'au moins un objet,
   **en ce que** pour l'objet, en utilisant au moins un paramètre en fonction des classes d'objets, on définit une zone de recherche (28, 34) dans l'image actuelle dans laquelle on cherche des pixels pour l'objet, et
   en utilisant la valeur prédite au moins de la position de l'objet et de l'emplacement des pixels dans l'image actuelle, on détermine une nouvelle valeur pour au moins la position de l'objet.

5. Procédé selon la revendication 4,
   **caractérisé en ce que**
   pour la poursuite d'objets, on utilise un filtre Kalman, et au moins une des variances et/ou covariances de la position, utilisées pour la définition de la zone de recherche (28, 34), est déterminée pour au moins un objet en fonction d'au moins un paramètre de modèle en fonction des classes d'objets.

6. Procédé selon l'une quelconque des revendications précédentes,
   **caractérisé en ce que**
   il est prévu au moins une classe d'objets pour des articles (16) qui ne sont pas des véhicules, et
   **en ce que** pour des objets auxquels cette classe d'objets a été associée, on utilise un type de modèle et/ou un paramètre de modèle en fonction de la classe d'objets, selon lequel des mouvements possibles de l'objet dans toutes les directions sont traités de la même façon.

7. Procédé selon l'une quelconque des revendications précédentes,
   **caractérisé en ce que**
   pour des objets auxquels est associée une des classes d'objets pour véhicules (32), on utilise un type de modèle dans lequel un axe longitudinal d'objet est associé à l'objet, et
   **en ce que** des mouvements de l'objet en direction de l'axe longitudinal d'objet et des mouvements perpendiculaires à la direction de l'axe longitudinal d'objet sont pris en considération de différente façon dans le type de modèle.

8. Procédé selon la revendication 7,
   **caractérisé en ce que**
   pour des objets auxquels est associée une des classes d'objets pour véhicules, on utilise un type de modèle spécifique des classes d'objets dans lequel des conditions forcées cinématiques sont prises en considération.

**9.** Procédé selon la revendication 8,
**caractérisé en ce que**
on utilise un modèle à une piste ou à deux pistes.

**10.** Procédé selon l'une quelconque des revendications précédentes,
**caractérisé en ce que**
pour au moins une classe d'objets est déterminée une plage de valeur pour le paramètre de modèle adaptable, et il est prévu une valeur standard ou de défaut prédéterminée qui est utilisée avant une première adaptation.

**11.** Procédé selon l'une quelconque des revendications précédentes,
**caractérisé en ce que**
une adaptation est effectuée lorsqu'une valeur mesurée d'au moins un paramètre d'état prédéterminé n'est pas homogène avec une valeur mesurée précédente ou avec une valeur du paramètre d'état prédéterminé qui a été prédite sur la base de valeurs précédentes des paramètres d'état.

**12.** Procédé selon l'une quelconque des revendications précédentes,
**caractérisé en ce que**
une adaptation est effectuée lorsqu'on constate que le capteur a quitté un état de mouvement normal ou est revenu dans celui-ci.

**13.** Programme d'ordinateur avec moyens de code de programme pour exécuter le procédé selon l'une des revendications 1 à 12, lorsque le programme est exécuté sur un ordinateur.

**14.** Produit de programme d'ordinateur avec moyens de code de programme, qui sont mémorisés sur un support de données lisible par ordinateur pour exécuter le procédé selon l'une des revendications 1 à 12, lorsque le produit de programme est exécuté sur un ordinateur.

**15.** Dispositif pour la reconnaissance et la poursuite d'objets, comportant au moins un capteur, en particulier un scanner laser (12), réalisé pour détecter des images de préférence à résolution de vitesse ou de profondeur d'une zone de surveillance (14), dont la zone de visibilité (14) inclut la zone de surveillance, et comportant un dispositif de traitement de données (20), comprenant :

- des moyens de reconnaissance et de poursuite d'objets en utilisant un modèle associé à un objet respectif pour le développement de paramètres d'état dans le temps, qui décrivent au moins une propriété de l'objet spécifique aux capteurs, le modèle ayant un type de modèle et étant susceptible d'être paramétré par au moins un paramètre de modèle, et
- des moyens de classification d'objets à l'aide de plusieurs classes d'objets qui concernent au moins une propriété d'objets qui peut être déterminée à partir d'au moins une des images résolues en profondeur, l'une des classes d'objets étant associée à au moins un objet, en fonction de la classe d'objets associée, et un type de modèle et une valeur pour le paramètre de modèle correspondant étant associés à l'objet,

**caractérisé par**
des moyens d'adaptation, en fonction de la situation, du type de modèle et/ou au moins d'un des paramètres de modèle d'au moins un objet sans un changement de la classe d'objets.

# Fig. 1

# Fig. 2

```
┌─────────────────────────┐
│   Einlesen eines Bildes  │─── S 10
└─────────────────────────┘
            │
            ▼
┌─────────────────────────┐
│      Segmentierung       │─── S 12
└─────────────────────────┘
            │
            ▼
┌─────────────────────────┐
│     Festlegung des       │─── S 16
│      Suchbereichs        │
└─────────────────────────┘
            │
            ▼
┌─────────────────────────┐
│ Segment-Objekt-Zuordnung │─── S 18
└─────────────────────────┘
            │
            ▼
┌─────────────────────────┐
│  Berechnung d. Schätzwerte│
│   für Zustandsparameter  │─── S 20
│    existenter Objekte    │
└─────────────────────────┘
            │
            ▼
┌─────────────────────────┐
│  Generierung neuer Objekte│
│   aus nicht zugeordneten │─── S 22
│       Segmenten          │
└─────────────────────────┘
            │
            ▼
┌─────────────────────────┐
│     Zuordnung einer      │─── S 24
│      Objektklasse        │
└─────────────────────────┘
            │
            ▼
┌─────────────────────────┐
│  Ausgabe/Speicherung der │─── S 26
│       Objektdaten        │
└─────────────────────────┘
            │
            ▼
┌─────────────────────────┐
│  Prädiktion der Meßwerte │─── S 14
└─────────────────────────┘
```

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KLAUS C.J. DIETMAYER et al.** Model Based Classification and Object Tracking in Traffic Scenes from Range Images. *Proceedings of IV 2001, IEEE Intelligent Vehicles Symposium,* 2001, vol. IV

- **K. FUERSTENBERG et al.** Object Tracking and Classification using Laserscanners - Pedestrian Recognition in urban environment. *2001 IEEE Intelligent Transportation Systems Conference Proceedings,* 25. August 2001